Europäisches Patentamt

European Patent Office

Office européen des brevets

(19)

(11) Numéro de publication : **0 049 197**
**B1**

(12) # FASCICULE DE BREVET EUROPÉEN

(45) Date de publication du fascicule du brevet :
09.01.85

(21) Numéro de dépôt : 81401481.7

(22) Date de dépôt : 24.09.81

(51) Int. Cl.⁴ : **G 21 C 11/08**

(54) **Dispositif de calorifugeage pour isoler la région supérieure de l'espace annulaire séparant les cuves principale et de sécurité d'un réacteur nucléaire à neutrons rapides.**

(30) Priorité : 30.09.80 FR 8020917

(43) Date de publication de la demande :
07.04.82 Bulletin 82/14

(45) Mention de la délivrance du brevet :
09.01.85 Bulletin 85/02

(84) Etats contractants désignés :
**BE DE GB IT NL**

(56) Documents cités :
**DE-A- 2 538 551**
**FR-A- 2 194 283**
**FR-A- 2 235 329**
**FR-A- 2 283 518**
**FR-A- 2 283 522**
**FR-A- 2 289 032**
**FR-A- 2 319 074**
**GB-A- 2 018 401**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Lemercier, Guy**
**67, Avenue de la Bourgade**
**F-13610 Le Puy Sainte Reparade (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne un dispositif de calorifugeage destiné à isoler la région supérieure d'un espace annulaire ménagé entre la cuve principale et la cuve de sécurité d'un réacteur nucléaire à neutrons rapides.

Dans les réacteurs nucléaires à neutrons rapides, on sait que le cœur du réacteur est disposé dans une cuve cylindrique à axe vertical, dite cuve principale doublée par une cuve de sécurité, également cylindrique et d'axe confondu avec celui de la cuve principale. Ces cuves sont obturées à leur partie supérieure par une dalle horizontale, habituellement en béton, qui assure également le supportage des cuves. A cet effet, les extrémités supérieures de la cuve principale et de la cuve de sécurité sont encastrées dans la dalle. La cuve principale contient également un volume approprié d'un métal liquide tel que du sodium assurant l'extraction des calories dégagées par la réaction de fission du combustible dans le cœur. En fonctionnement, la température de la cuve principale est donc relativement élevée. L'espace délimité entre la cuve principale et la cuve de sécurité est rempli par un gaz inerte tel que de l'azote, qui est porté à une température relativement élevée par suite de son contact avec la paroi externe de la cuve principale. Or, les zones de liaison des cuves avec la dalle ainsi que les parties des cuves qui prolongent ces zones en dessous de la dalle constituent des organes délicats pour lesquels il est souhaitable de limiter autant que possible les gradients thermiques préjudiciables à leur tenue mécanique et, du fait de la suspension des cuves qu'ils assurent, à la sécurité du réacteur.

A cet effet, il apparaît comme nécessaire d'isoler la région supérieure de l'espace annulaire ménagé entre les cuves afin de maintenir le gaz inerte qu'il contient à une température constante et sensiblement inférieure à celle qui règne dans le reste de cet espace annulaire. D'autre part, il est utile de réaliser un dispositif de calorifugeage autorisant un accès relativement aisé à la région isolée, notamment pour inspecter les soudures de la cuve. Le dispositif de calorifugeage assurant l'isolation thermique de la région supérieure de l'espace annulaire ménagé entre les cuves doit également être conçu pour supporter les variations dimensionnelles axiales et transversales des deux cuves rendues inévitables par les modifications des températures atteintes selon les régimes de fonctionnement du réacteur. Ce dispositif doit aussi pouvoir maintenir sa capacité d'isolation même en présence d'aérosols du métal liquide de refroidissement dans l'hypothèse d'une fuite de celui-ci à travers la paroi de la cuve principale. Enfin, le dispositif de calorifugeage doit pouvoir se déformer en cas d'incident mécanique ou thermique de façon à ne pas poinçonner les cuves.

On connaît déjà par la commande de brevet FR-A-2 289 032 au nom du Commissariat à l'Energie Atomique, un dispositif de calorifugeage répondant à ces différentes exigences. Ce dispositif comporte une couronne calorifuge inférieure, de forme générale cylindrique, montée sous la dalle et délimitant avec celle-ci et la paroi des cuves en regard la région à isoler, cette couronne s'étendant à travers l'espace annulaire dans un plan horizontal et étant supportée par la dalle par l'intermédiaire de tirants de support, et une couronne calorifuge supérieure, séparée en deux éléments coaxiaux reposant sur la couronne inférieure et respectivement appliqués contre les parois des deux cuves par un ensemble de ressorts d'écartement disposés radialement en appui contre les deux éléments.

Un tel dispositif de calorifugeage donne généralement des résultats satisfaisants. Cependant, on a observé que les éléments coaxiaux constituant la couronne calorifuge supérieure risquent de se gripper après une certaine période d'utilisation. Un tel grippage des éléments qui viennent en appui contre chacune des cuves sous l'action des ressorts d'écartement a pour effet de rendre ces derniers inefficaces, ce qui peut conduire à une perte de l'étanchéité du dispositif lorsque les variations de température des cuves ont pour conséquence une augmentation de la largeur de l'espace annulaire ménagé entre les cuves.

La présente invention a pour objet un dispositif de calorifugeage satisfaisant à l'ensemble des exigences énoncées précédemment et ne présentant pas l'inconvénient qui vient d'être mentionné. Plus précisément, la présente invention a pour objet un dispositif de calorifugeage assurant à la fois une étanchéité correcte entre le gaz inerte chaud et le gaz inerte froid situés de part et d'autre du dispositif et une souplesse à l'extension et à la compression permettant de suivre sans problème les dilatations ou d'éventuelles déformations des cuves.

A cet effet, il est proposé conformément à l'invention un dispositif de calorifugeage pour isoler la région supérieure de l'espace annulaire séparant les cuves principale et de sécurité d'un réacteur nucléaire à neutrons rapides, ces deux cuves comportant un axe vertical commun et étant obturées à leur partie supérieure par une dalle horizontale assurant également la suspension des deux cuves, ce dispositif comprenant une couronne calorifuge inférieure, de forme générale annulaire, définissant un bord périphérique interne espacé de la cuve principale et un bord périphérique externe espacé de la cuve de sécurité, un écran thermique interne assurant l'étanchéité entre le bord périphérique interne de la couronne et la cuve principale et un écran thermique externe assurant l'étanchéité entre le bord périphérique externe de la couronne et la cuve de sécurité, chacun des écrans thermiques étant déformable de façon à compenser toute dilatation différentielle ou déformation des cuves, caractérisé en ce que les extrémités supérieure et inférieure de l'écran thermique interne sont fixées respectivement à la cuve principale et au bord périphérique interne, en ce que les extrémités supérieure et inférieure de l'écran thermique externe sont fixées respectivement à la cuve de sécurité et au bord périphérique externe et en ce que la partie centrale de chacun des écrans thermiques est légèrement tronconique, de telle sorte que la distance entre chaque écran thermique et la cuve à laquelle il est fixé est plus grande à sa partie inférieure qu'à sa partie supérieure.

Dans cette disposition, on voit que les écrans thermiques interne et externe permettent, avec l'aide de la couronne calorifuge inférieure, d'isoler le gaz inerte chaud disposé en dessous du dispositif de calorifugeage du gaz inerte froid disposé au-dessus de ce dispositif, tout en présentant une souplesse suffisante pour supporter sans risque de rupture de cette étanchéité les dilatations et les déformations des cuves.

Conformément à un mode de réalisation préféré de l'invention, chacun des écrans thermiques est constitué par des plaques de couverture modulaires entre lesquelles est disposé un matelas d'éléments métalliques minces comprimé entre les plaques de couverture par des moyens d'assemblage tels que des goujons ou des boulons, et l'épaisseur des plaques de couverture est suffisamment faible pour autoriser une déformation des écrans thermiques permettant de compenser les déformations des cuves dues notamment aux variations de température.

La couronne calorifuge inférieure peut également être constituée par des plaques de couverture modulaires inférieures et supérieures entre lesquelles est disposé un matelas d'éléments métalliques minces comprimé entre ces plaques de couverture par des moyens d'assemblage tels que des goujons, l'épaisseur des plaques de couverture étant suffisamment faible pour autoriser une déformation de la couronne calorifuge permettant d'éviter un poinçonnage des cuves en cas de déformations excessives de celles-ci résultant par exemple d'un incident mécanique ou thermique. Dans ce cas, la fixation des bords périphériques de la couronne calorifuge à l'extrémité inférieure des écrans thermiques s'effectue de préférence au moyen de deux anneaux de supportage, chacun de ces anneaux est constitué d'éléments modulaires présentant en section la forme d'une équerre dont un côté est soudé sous la plaque de couverture inférieure de la couronne calorifuge et dont l'autre côté est fixé à l'extrémité inférieure de l'écran thermique correspondant par des moyens d'assemblage inférieurs de cet écran.

De façon comparable, l'extrémité supérieure de chacun des écrans peut être fixée à la cuve correspondante par des moyens d'assemblage supérieurs de l'écran, ces moyens d'assemblage comprenant alors de préférence des goujons soudés à la cuve et sur lesquels sont vissés des écrous.

Selon une autre caractéristique de l'invention, des cales calorifuges annulaires peuvent être comprimées entre chacun des écrans thermiques et la cuve à laquelle il est fixé afin d'écarter les écrans des cuves.

De préférence, la couronne calorifuge inférieure est munie de trous d'observation normalement obturés par des bouchons calorifuges munis de moyens de préhension à leur partie supérieure.

On décrira maintenant, à titre d'exemple non limitatif, un mode de réalisation particulier de l'invention en se référant aux dessins annexés dans lesquels :

la figure 1 est une vue en coupe schématique d'un réacteur nucléaire à neutrons rapides, montrant la localisation d'un dispositif de calorifugeage selon l'invention,

la figure 2 est une vue en coupe à plus grande échelle montrant un exemple de réalisation du dispositif de calorifugeage selon l'invention, et

la figure 3 est une vue en coupe comparable à la figure 2 montrant une partie du dispositif de calorifugeage dans laquelle est prévu un trou d'observation obturé par un bouchon calorifugé.

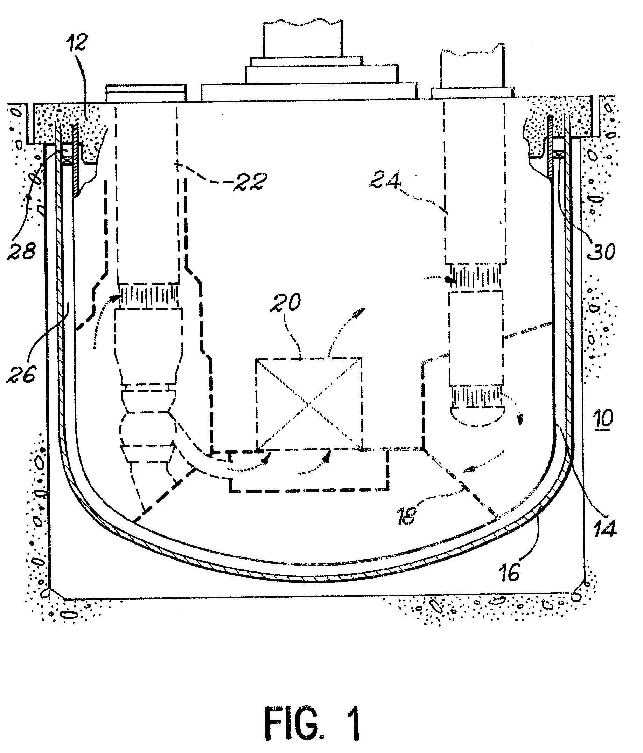

Sur la figure 1, on a représenté de façon très schématique le bloc-réacteur d'un réacteur nucléaire à neutrons rapides de type intégré. Comme le savent les spécialistes, ce bloc-réacteur comprend un puits de cuve en béton 10 constituant une protection biologique latérale et inférieure. Le puits de cuve 10 est obturé à sa partie supérieure par une dalle de béton 12 à laquelle sont suspendues la cuve principale 14 et la cuve de sécurité 16, cette dernière doublant en totalité l'enveloppe de la cuve principale. Les cuves principales 14 et de sécurité 16 sont de configuration générale cylindrique et définissent un axe commun confondu avec l'axe du puits de cuve 10.

La cuve principale 14 supporte par l'intermédiaire d'un platelage 18 le cœur 20 du réacteur dans lequel circule de bas en haut un métal liquide tel que du sodium contenu dans la cuve principale. Dans les réacteurs nucléaires à neutrons rapides de type intégré, la totalité du circuit primaire du réacteur est logée dans la cuve principale 14, de sorte que la dalle de béton 12 supporte également un certain nombre de pompes 22 et d'échangeurs de chaleur 24. La conception de ce type de réacteur étant ajourd'hui parfaitement connue, on se référera aux nombreuses publications existantes (voir notamment le Bulletin d'Informations Scientifiques et Techniques n° 182 de juin 1973) pour tout complément d'informations concernant la structure générale du réacteur et le fonctionnement de ses différents composants.

Comme on l'a déjà expliqué auparavant, l'espace annulaire 26 défini entre les cuves principale 14 et de sécurité 16 est rempli d'un gaz inerte habituellement constitué par de l'azote. Dans la majeure partie de cet espace annulaire 26, l'azote est chauffé à une température relativement élevée par suite de son contact avec la face externe de la cuve principale 14 qui contient le sodium liquide. Cependant, on a vu qu'il n'est pas souhaitable qu'un tel échauffement se produise à proximité immédiate de la zone d'accrochage des cuves principale 14 et de sécurité 16 sur la dalle de béton refroidie 12. Pour cette raison, la partie supérieure 28 de cet espace annulaire 26 est isolée thermiquement du reste de cet espace par un dispositif de calorifugeage 30 réalisé conformément aux enseignements de la présente invention.

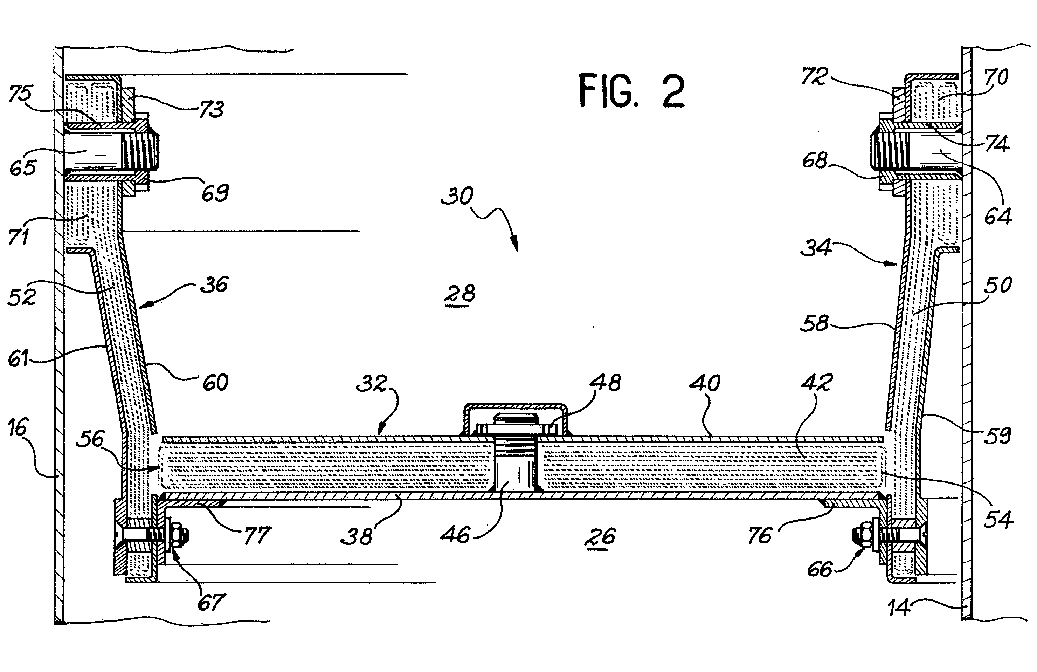

Ce dispositif de calorifugeage 30 est représenté en coupe selon un plan passant par l'axe commun des deux cuves et à plus grande échelle sur la figure 2.

On voit sur la figure 2 que ce dispositif de calorifugeage se compose essentiellement de trois parties. Ainsi, le dispositif 30 comprend tout d'abord une couronne calorifuge inférieure 32, de forme générale annulaire, disposée horizontalement dans l'espace annulaire 26 défini entre la cuve principale 14 et la cuve de sécurité 16. La couronne calorifuge 32 est disposée à proximité de la dalle 12, de préférence au-dessus du niveau du sodium liquide dans la cuve principale 14, afin que le sodium n'échauffe pas l'azote isolé dans la partie 28 de l'espace 26. Cette couronne calorifuge 32 est suspendue aux cuves 14 et 16 par un écran thermique interne 34 et par un écran thermique externe 36. Conformément à l'invention, l'assemblage de ces trois éléments est réalisé de telle sorte qu'ils assurent à la fois une isolation thermique entre la partie supérieure 28 de l'espace annulaire 26 et le reste de cet espace annulaire, qu'ils permettent de compenser les dilatations et les déformations éventuelles des cuves 14 et 16 tout en préservant cette étanchéité et qu'ils évitent tout risque de poinçonnage de ces cuves.

A cet effet, on voit sur la figure 2 que la largeur diamétrale de la couronne calorifuge 32 est très sensiblement inférieure à la largeur de l'espace 26 entre les cuves 14 et 16. En d'autres termes, il est prévu, d'une part entre le bord interne 54 de la couronne 32 et la cuve principale 14 et d'autre part entre le bord externe 56 de cette couronne et la cuve de sécurité 16, des jeux suffisamment grands pour tenir compte des variations importantes de la largeur de l'espace 26. De plus, les écrans thermiques 34 et 36 se comportent vis-à-vis de la couronne 32 comme des bretelles de supportage déformables dont la souplesse permet au dispositif 30 de supporter à la fois les variations dimensionnelles axiales et transversales des deux cuves.

Afin d'assurer leur fonction de calorifuge, la couronne 32 et les écrans 34 et 36 sont avantageusement formés au moyen d'une structure calorifuge dont la réalisation peut être conforme à celle envisagée pour assurer la protection thermique de la semelle de la dalle dans un réacteur à neutrons rapides, telle que décrite et revendiquée dans la demande de brevet FR-A-2 235 329 au nom du Commissariat à l'Energie Atomique. On rappelle que cette structure se compose d'un empilement de tôles métalliques formant des panneaux successifs superposés, séparés les uns des autres par des tôles minces, l'ensemble de ces panneaux et de ces tôles constituant un matelas d'éléments métalliques minces maintenu entre deux plaques d'extrémité parallèles plus épaisses par des moyens d'assemblage tels que des goujons ou des boulons. De plus, le matelas d'éléments métalliques minces est de préférence bordé latéralement par des cornières qui s'emboîtent mutuellement pour délimiter entre elles un espace étroit permettant d'isoler convenablement la structure vis-à-vis de l'atmosphère extérieure qui l'entoure, notamment du gaz inerte contenu dans l'espace 26.

La couronne 32 se compose alors d'un matelas 42 d'éléments métalliques minces maintenu entre une plaque de couverture inférieure 38 et une plaque de couverture supérieure 40, toutes deux horizontales et modulaires, par des goujons 46 soudés sur la plaque de couverture inférieure 38 et dont l'extrémité supérieure est filetée pour recevoir un écrou 48.

De façon comparable, chacun des écrans 34, 36 se compose d'un matelas 50, 52 d'éléments métalliques minces maintenu entre deux plaques de couverture parallèles 58, 59 et 60, 61 respectivement, ces plaques étant modulaires et de configuration générale cylindrique d'axe confondu avec celui des cuves 14 et 16. Le serrage de l'ensemble constitué par les plaques 58, 59 et par le matelas 50, d'une part, et par les plaques 60, 61 et par le matelas 52, d'autre part, est réalisé au moyen de goujons 64, 65 qui assurent en même temps la fixation des écrans sur les cuves 14 et 16 et de vis 66, 67 qui assurent en même temps la fixation des bords périphériques interne 54 et externe 56 de la couronne 32 sur les écrans 34 et 36, comme on le verra par la suite. D'autres moyens d'assemblages (non représentés) tels que des goujons peuvent compléter l'assemblage des écrans 34 et 36.

De façon plus précise, on voit sur la figure 2 que les goujons 64 sont fixés radialement par soudure sur la face externe de la cuve principale 14 et sont munis à leur autre extrémité d'un filetage sur lequel est vissé un écrou 68. Les goujons 64 et les écrous 68 qui leur sont associés assurent ainsi la compression et la fixation de la partie supérieure de l'écran thermique interne 34 sur la face externe de la cuve principale 14. De préférence, une cale calorifuge annulaire 70 est interposée entre l'écran 34 et la face externe de la cuve principale 14 afin d'accroître les possibilités de déformation de l'écran 34 tout en améliorant l'étanchéité calorifique, comme on le verra par la suite. La structure de la cale calorifuge 70 est comparable à celles de la couronne 32 et des écrans 34 et 36, de sorte qu'elle ne sera pas décrite en détail. Une cale ou rondelle ordinaire 72 peut également être interposée entre l'écrou 68 et l'écran 34. Enfin, l'écrou 68 peut se prolonger vers la cuve 14 par un manchon 74 dont la longueur, en combinaison avec l'épaisseur de la cale 72, permet de limiter le serrage de l'écran 34 et de la cale 70.

La fixation de l'écran thermique externe 36 sur la cuve de sécurité 16 au moyen des goujons 65 est totalement semblable à celle de l'écran 34 sur la cuve principale 14 et ne sera donc pas décrite en détail. On indiquera simplement que les goujons 65 sont soudés radialement sur la face interne de la cuve de sécurité 16 et reçoivent sur leur extrémité filetée un écrou 69 assurant le serrage simultané d'une cale ou rondelle 73, de l'écran 36, et d'une cale calorifuge annulaire 71. Le serrage et la compression de l'écran 36 et de la cale calorifuge 71 peut également être limité au moyen de la cale 73 et d'un manchon 75 prolongeant l'écrou 69 vers la cuve 16.

La fixation du bord périphérique interne 54 de la couronne calorifuge 32 à l'extrémité inférieure de l'écran thermique interne 34 s'effectue par l'intermédiaire des boulons 66 au moyen d'un anneau de supportage 76 constitué d'éléments modulaires et présentant en section la forme d'une équerre dont un côté est soudé sous la plaque de couverture inférieure 38 de la couronne 32 et dont l'autre côté est fixé à la partie inférieure de l'écran 34 par les boulons 66.

De la même manière, le bord périphérique externe 56 de la couronne calorifuge 32 est fixé à la partie inférieure de l'écran thermique externe 36 par les boulons 67 au moyen d'éléments d'un anneau de supportage 77 présentant en section la forme d'une équerre dont un côté est soudé sous la plaque de couverture inférieure 38 de la couronne 32 et dont l'autre côté est fixé à la partie inférieure de l'écran 36 au moyen des boulons 67.

Conformément à l'invention, dans le mode de réalisation représenté, les plaques de couvertures 58, 59, 60, 61 de chacun des écrans 34 et 36 sont relativement minces. Plus précisément, l'épaisseur des plaques de couverture 58, 59, 60, 61 est choisie de façon à permettre aux écrans 34 et 36 de se déformer afin de tenir compte des dilatations et des déformations éventuelles des cuves 14 et 16.

De façon comparable, les plaques de couverture 38 et 40 de la couronne 32 sont relativement minces afin de permettre une déformation de cette dernière dans l'hypothèse où une trop grande déformation des cuves 14 et 16 amènerait celles-ci en contact avec les parties inférieures des écrans 34 et 36. Tout risque de poinçonnage des cuves est ainsi évité.

Afin d'accroître les possibilités de déformation des écrans 34 et 36, on observera également sur la figure 2 que les écrans présentent dans leur partie centrale une forme légèrement tronconique. Cette forme est telle que la partie inférieure de l'écran thermique interne 34 est normalement plus éloignée de la cuve principale 14 que sa partie supérieure. De plus, si la distance séparant la partie supérieure de l'écran 34 de la cuve principale 14 est fixée à demeure par l'épaisseur de la cale calorifuge 70, il n'en est pas de même de la distance séparant la partie inférieure de l'écran 34 de la cuve 14. Des modifications relativement importantes de cette dernière distance par déformation de la partie centrale de l'écran 34 peuvent donc intervenir par suite des dilatations et des déformations des cuves 14 et 16 au cours du fonctionnement du réacteur.

De façon comparable, la forme légèrement tronconique de l'écran 36 dans sa partie centrale est telle que la distance séparant ce dernier de la cuve de sécurité 16 est plus grande à sa partie inférieure qu'à sa partie supérieure. De plus, comme pour l'écran 34, si la distance séparant l'écran 36 de la cuve 16 est fixée par la cale calorifuge 71 au niveau de la partie supérieure de l'écran, la distance séparant la partie inférieure de l'écran de la cuve 16 peut varier par déformation de la partie centrale de l'écran 36 lorsque des dilatations et des déformations des cuves 14 et 16 l'exigent.

On voit que le dispositif qui vient d'être décrit permet d'assurer une bonne étanchéité thermique entre le gaz inerte chaud et le gaz inerte froid situés de part et d'autre de celui-ci tout en présentant une grande souplesse à l'extension et à la compression permettant de supporter sans dommage les dilatations ou d'éventuelles déformations des cuves. L'étanchéité entre les différentes parties est obtenue par le serrage des goujons et boulons de fixation et d'assemblage, ce serrage ayant pour effet de provoquer le fluage du matelas d'éléments métalliques minces constituant le calorifuge.

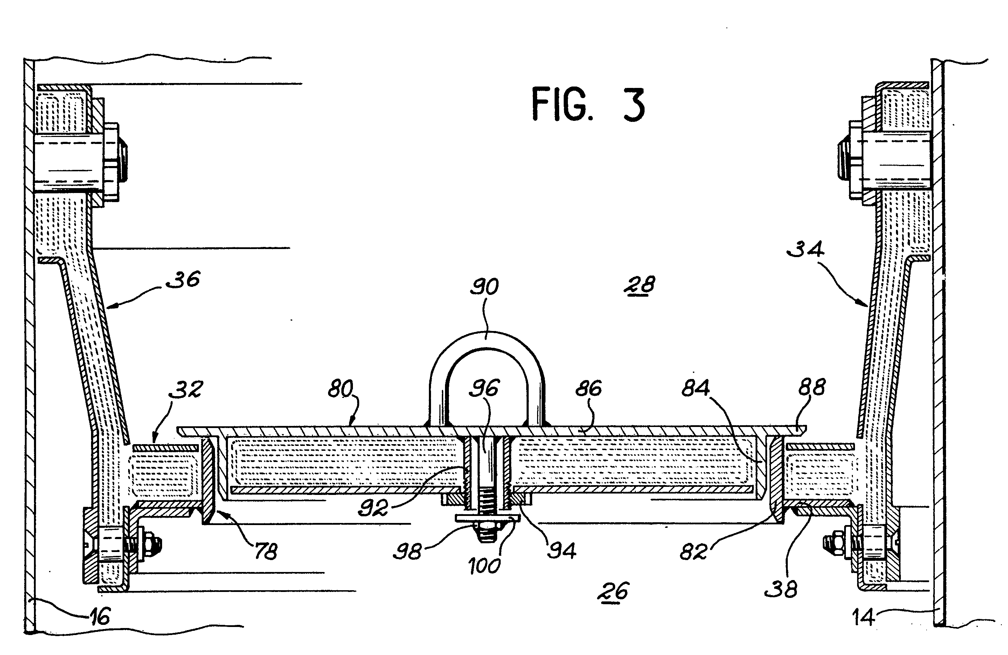

Afin de permettre un accès à l'espace annulaire 26 séparant la cuve principale 14 de la cuve de sécurité 16, on peut prévoir dans la couronne calorifuge horizontale 32 un ou plusieurs trous d'observation 78 obturés par des bouchons calorifugés 80 comme l'illustre la figure 3.

Le bord du trou 78 est alors matérialisé par une virole 82 soudée par exemple à la plaque de couverture inférieure 38 de la couronne 32. Le bouchon 80 est réalisé de préférence dans une structure calorifuge comparable à celle de la couronne 32 et des écrans thermiques 34 et 36. Il ne sera donc pas décrit en détail de ce point de vue. On observera simplement qu'il comprend une plaque de couverture supérieure 86 portant une virole 84 qui vient s'engager dans la virole 82. La plaque 86 comprend de plus un rebord 88 qui vient en appui sur l'extrémité supérieure de la virole 82, cette dernière assurant ainsi le supportage du bouchon 80 par gravité. La plaque de couverture supérieure 86 comprend enfin dans sa partie centrale un système de préhension constitué par un crochet de levage 90 soudé sur la plaque 86 dans la variante représentée. Le serrage de la structure calorifuge du bouchon 80 est réalisé de la façon habituelle au moyen d'un ou plusieurs goujons 92 soudés à la plaque de couverture supérieure 86 et dont l'extrémité inférieure filetée reçoit un écrou 94. Dans la variante représentée sur la figure 3, le goujon 92 est creux et on a logé à l'intérieur un second goujon 96 également soudé à la plaque 86 et dont l'extrémité filetée reçoit un second écrou 98 qui maintient une plaque 100 légèrement en dessous de l'extrémité inférieure du goujon 92. Ce système constitue une sécurité permettant de maintenir l'ensemble de la structure calorifuge du bouchon 80 en cas de rupture du premier goujon 92.

## Revendications

1. Dispositif de calorifugeage pour isoler la région supérieure (28) de l'espace annulaire (26) séparant les cuves principale (14) et de sécurité (16) d'un réacteur nucléaire à neutrons rapides, ces deux cuves comportant un axe vertical commun et étant obturées à leur partie supérieure par une dalle horizontale (12) assurant également la suspension des deux cuves, ce dispositif comprenant une couronne calorifuge inférieure (32), de forme générale annulaire, définissant un bord périphérique interne (54) espacé de la cuve principale et un bord périphérique externe (56) espacé de la cuve de sécurité, un écran thermique interne (34) assurant l'étanchéité entre le bord périphérique interne de la couronne (32) et la cuve principale (14) et un écran thermique externe (36) assurant l'étanchéité entre le bord périphérique externe de la couronne (32) et la cuve de sécurité (16), chacun des écrans thermiques (34, 36) étant déformable de façon à compenser toute dilatation différentielle ou déformation des cuves (14, 16), caractérisé en ce que les extrémités supérieure et inférieure de l'écran thermique interne (34) sont fixées respectivement à la cuve principale (14) et au bord périphérique interne (54), en ce que les extrémités supérieure et inférieure de l'écran thermique externe (36) sont fixées respectivement à la cuve de sécurité (16) et au bord périphérique externe (56) et en ce que la partie centrale de chacun des écrans thermiques est légèrement tronconique, de telle sorte que la distance entre chaque écran thermique et la cuve à laquelle il est fixé est plus grande à sa partie inférieure qu'à sa partie supérieure.

2. Dispositif de calorifugeage selon la revendication 1, caractérisé en ce que chacun des écrans thermiques (34, 36) est constitué par des plaques de couverture modulaires (58, 59 ; 60, 61) entre lesquelles est disposé un matelas (50, 52) d'éléments métalliques minces comprimé entre ces plaques de couverture par des moyens d'assemblages (64, 66 ; 65, 67) et en ce que l'épaisseur des plaques de couverture est suffisamment faible pour autoriser une déformation des écrans thermiques (34, 36) permettant de compenser toute dilatation différentielle ou déformation des cuves (14, 16).

3. Dispositif de calorifugeage selon la revendication 2, caractérisé en ce que la couronne calorifuge inférieure (32) est constituée par des plaques de couverture modulaire (38, 40) entre lesquelles est disposé un matelas (42) d'éléments métalliques minces comprimé entre ces plaques de couverture par des moyens d'assemblage (46), et en ce que l'épaisseur des plaques de couverture est suffisamment faible pour autoriser une déformation de la couronne calorifuge (32) permettant d'éviter un poinçonnage des cuves (14, 16) en cas de déformation excessive des cuves.

4. Dispositif de calorifugeage selon la revendication 3, caractérisé en ce que la fixation des bords périphériques (54, 56) de la couronne calorifuge (32) à l'extrémité inférieure des écrans thermiques (34, 36) s'effectue au moyen de deux anneaux de supportage (76, 77), chacun de ces anneaux étant constitué d'éléments modulaires présentant en section la forme d'une équerre dont un côté est soudé sous la plaque de couverture inférieure (38) de la couronne calorifuge (32) et dont l'autre côté est fixé à l'extrémité inférieure de l'écran thermique correspondant par des moyens d'assemblage inférieurs (66, 67) de cet écran.

5. Dispositif de calorifugeage selon l'une quelconque des revendications 2 à 4, caractérisé en ce que l'extrémité supérieure de chacun des écrans thermiques (34, 36) est fixée à la cuve correspondante (14, 16) par des moyens d'assemblage supérieurs (64, 65) de cet écran.

6. Dispositif de calorifugeage selon la revendication 5, caractérisé en ce que les moyens d'assemblage supérieurs de chacun des écrans thermiques comprennent des goujons (64, 65) soudés à cette cuve et sur lesquels sont vissés des écrous (68, 69).

7. Dispositif de calorifugeage selon l'une quel- conque des revendications précédentes, caracté- risé en ce que des cales calorifuges annulaires (70, 71) sont comprimées entre la partie supérieure de chacun des écrans thermiques (34, 36) et la cuve (14, 16) à laquelle ledit écran est fixé.

8. Dispositif de calorifugeage selon l'une quel- conque des revendications précédentes, caracté- risé en ce que la couronne calorifuge inférieure (32) est munie de trous d'observation (78) normalement obturés par des bouchons calorifuges (80) munis de moyens de préhension (90) à leur partie supérieure.

## Claims

1. Thermal insulation device for the upper region (28) of the annular space (26) between the principal containment vessel (14) and the safety containment vessel (16) of a fast neutron reactor said two containment vessels having a common vertical axis and being closed at the top by a horizontal containment slab (12) which also provides suspension means for the two containment vessels, said device comprising a lower heat- insulating ring (32) of generally annular form, defining an internal peripheral edge (54), spaced from the principal containment vessel, and an external peripheral edge (56), spaced from the safety containment vessel, an internal heat shield (34), providing a fluid-tight seal between the internal peripheral edge of the ring (32) and the principal containment vessel (14), and an external heat shield (36) providing a fluid-tight seal between the external peripheral edge of the ring (32) and the safety containment vessel (16), each of the heat shields (34, 36) being deformable whereby to compensate for any differential expansion or deformation of the containment vessels (14, 16), characterized in that the upper and lower edges of the internal heat shield (34) are respectively fixed to the principal containment vessel (14) and to the internal peripheral edge (54), and in that the upper and lower edges of the external heat shield (36) are respectively fixed to the safety containment vessel (16) and to the external peripheral edge (56), and in that the central part of each of the heat shields is slightly frusto-conical, whereby the distance between each heat shield and the containment vessel to which it is fixed is greater at its bottom than at its top.

2. Thermal insulation device according to Claim 1, characterized in that each of the heat shields (34, 36) comprises modular cover plates (58, 59 ; 60, 61), disposed between which is a cushion (50, 52) of thin metal elements, compressed between the cover plates by assembly means (64, 66 ; 65, 67), and in that the thickness of the cover plates is small enough to allow deformation of the heat shields (34, 36), thereby compensating for any differential expansion or deformation of the containment vessels (14, 16).

3. Thermal insulation device according to Claim 2, characterized in that the lower heat-insulating ring (32) comprises modular cover plates (38, 40) disposed between which is a cushion (42) of thin metallic elements compressed between the cover plates by assembly means (46), and in that the thickness of the cover plates is small enough to allow deformation of the heat-insulating ring (32), thereby permitting avoidance of fracture of the containment vessels (14, 16) in the case of excessive deformation thereof.

4. Thermal insulation device according to Claim 3, characterized in that fixation of the peripheral edges (54, 56) of the heat-insulating ring (32) to the lower edges of the heat shields (34, 36) is effected by means of two support rings (76, 77), each of said rings being made up of modular elements having an L-shaped cross section, one limb of which is welded below the lower cover plate (38) of the heat-insulating ring (32), and the other limb of which is fixed to the lower edge of the corresponding heat shield by the lower assembly means (66, 67) of said shield.

5. Thermal insulation device according to any one of Claims 2 to 4, characterized in that the upper edge of each of the heat shields (34, 36) is fixed to the corresponding containment vessel (14, 16) by the upper assembly means (64, 65) of said shield.

6. Thermal insulation device according to Claim 5, characterized in that the upper assembly means of each of the heat shields comprise studs (64, 65) which are welded to the respective containment vessels, and threaded on which are nuts (68, 69).

7. Thermal insulation device according to any one of the preceding Claims, characterized in that annular heat-insulating packings (70, 71) are compressed between the upper part of each of the heat shields (34, 36) and the respective containment vessel (14, 16) to which said shield is fixed.

8. Thermal insulation device according to any one of the preceding Claims, characterized in that the lower heat-insulating ring (32) has observation ports (78) normally closed by heat-insulating stoppers (80) having gripping means (90) at their upper ends.

## Ansprüche

1. Wärmedämmvorrichtung zum Isolieren des oberen Bereiches (28) eines zwischen dem Hauptbehälter (14) und dem Sicherheitsbehälter (16) eines Kernreaktors liegenden Ringraumes (26), wobei die beiden Behälter eine gemeinsame vertikale Achse aufweisen und in ihrem oberen Bereich mit einer horizontalen Platte (12) geschlossen sind, die auch die Befestigung der zwei Behälter sicherstellt, und wobei die Vorrichtung umfaßt einen allgemeinen ringförmigen, unteren Wärmedämmkranz (32), welcher einen inneren, von dem Hauptbehälter beabstandeten Umfangsrand (54) und einen äußeren, von dem Sicherheitsbehälter beabstandeten Umfangsrand (56) aufweist, ein inneres Wärmeschild (54), welches die Abdichtung zwischen dem inneren Umfangsrand des Kranzes (32) und dem Hauptbehälter (14) sicherstellt, und ein äußeres Wärmeschild (36), welches die Abdichtung zwischen dem äußeren Umfangsrand des Kranzes (32) und dem Sicherheitsbehälter (16) sicherstellt, wobei jedes der Wärmeschilde (34, 36) derart verformbar ist, daß jegliche differentielle Ausdehnung oder Verformung der Behälter (14, 16) ausgeglichen wird, dadurch gekennzeichnet, daß die oberen und unteren Enden des inneren Wärmeschildes (34) an dem Hauptbehälter (14) bzw. dem inneren Umfangsrand (54) befestigt sind, daß die oberen und unteren Enden des äußeren Wärmeschildes (36) an dem Sicherheitsbehälter (16) bzw. dem äußeren Umfangsrand (56) befestigt sind und daß der mittlere Teil eines jeden Wärmeschildes leicht kegelstumpfförmig derart ist, daß der Abstand zwischen jedem Wärmeschild und dem Behälter, an dem er befestigt ist, in seinem unteren Teil größer als in seinem oberen Teil ist.

2. Wärmedämmvorrichtung nach Anspruch 1, dadurch gekennzeichnet, daß die Wärmeschilde (34, 36) von modularen Deckplatten (58, 59 ; 60, 61) gebildet sind, zwischen denen eine aus dünnen Metallelementen gebildete Matte (50, 52) angeordnet ist, die zwischen diesen Deckplatten durch Zusammenbaumittel (64, 66 ; 65, 67) zusammengedrückt ist, und daß die Dicke dieser Deckplatten ausreichend schwach ist, um eine Verformung der Wärmeschilde (34, 36) zuzulassen, um jegliche differentielle Ausdehnung oder Verformung der Behälter (14, 16) ausgleichen zu können.

3. Wärmedämmvorrichtung nach Anspruch 2, dadurch gekennzeichnet, daß der untere Wärmedämmkranz (32) von modularen Deckplatten (38, 40) gebildet ist, zwischen denen eine aus dünnen Metallelementen gebildete Matte (42) angeordnet ist, die zwischen diesen Deckplatten durch Zusammenbaumittel (46) zusammengedrückt ist, und daß die Dicke dieser Deckplatten ausreichend schwach ist, um eine Verformung des Wärmedämmkranzes (32) zuzulassen, damit ein Eindrücken der Behälter (14, 16) im Falle einer übergroßen Verformung der Behälter vermieden werden kann.

4. Wärmedämmvorrichtung nach Anspruch 3, dadurch gekennzeichnet, daß die Befestigung der Umfangsränder (54, 56) des Wärmedämmkranzes (32) am unteren Ende der Wärmeschilde (34, 36) mittels zweier Halteringe (76, 77) erfolgt, wobei jeder dieser Ringe aus modulären Elementen gebildet ist, die im Schnitt die Form eines Winkels haben, dessen eine Seite unter der unteren Deckplatte (38) des Wärmedämmkranzes (32) angeschweißt ist, und dessen andere Seite am unteren Ende des entsprechenden Wärmeschildes durch die unteren Zusammenbaumittel (66, 67) dieses Schildes befestigt ist.

5. Wärmedämmvorrichtung nach irgendeinem der Ansprüche 2 bis 4, dadurch gekennzeichnet, daß das obere Ende jeden Wärmeschildes (34, 36) an dem entsprechenden Behälter (14, 16) mittels der oberen Zusammenbaumittel (64, 65) dieses Schildes befestigt ist.

6. Wärmedämmvorrichtung nach Anspruch 5, dadurch gekennzeichnet, daß die oberen Zusammenbaumittel eines jeden Wärmeschildes Bolzen (64, 65) umfassen, die an diesen Behälter angeschweißt sind und auf die Muttern (68, 69) aufgeschraubt sind.

7. Wärmedämmvorrichtung nach irgendeinem der vorhergehenden Ansprüche, dadurch gekennzeichnet, daß ringförmige Wärmedämmbeilagen (70, 71) zwischen dem oberen Teil eines jeden Wärmeschildes (34, 36) und dem Behälter (14, 16) zusammengedrückt sind, an dem der Wärmeschild befestigt ist.

8. Wärmedämmvorrichtung nach irgendeinem der vorhergehenden Ansprüche, dadurch gekennzeichnet, daß der untere Wärmekranz (32) mit Schauöffnungen (78) versehen ist, die normalerweise durch Wärmedämmstopfen (80) geschlossen sind, die an ihrem oberen Teil Mittel (90) zum Ergreifen aufweisen.

FIG. 1

1

FIG. 2

FIG. 3

0 049 197